# EUROPÄISCHE PATENTSCHRIFT

(11) **EP 0 692 369 B1**
(45) Veröffentlichungstag und Bekanntmachung des Hinweises auf die Patenterteilung: **20.05.1998**
(21) Anmeldenummer: 95110872.9
(22) Anmeldetag: 12.07.1995
(51) Int. Cl.: B31B 1/16, B26D 11/00, B26D 7/26

(54) **Anlage zur Herstellung von Wellpappebögen mit veränderbarem Format**
Installation for the production of corrugated paperboard with variable format
Appareil pour la fabrication de feuilles de carton ondulé de format variable

(30) Priorität: 16.07.1994 DE 4425155
(43) Veröffentlichungstag der Anmeldung: 17.01.1996
(73) Patentinhaber: BHS CORRUGATED MASCHINEN- UND ANLAGENBAU GmbH, 92729 Weiherhammer (DE)
(72) Erfinder: Böhm, Roman, D-92533 Wernberg-Köblitz (DE); Grill, Martin, D-92708 Mantel (DE); Titz, Felix, D-92729 Weiherhammer (DE); Waldeck, Karl, D-92694 Etzenricht (DE)
(74) Vertreter: Rau, Manfred, Dr. Dipl.-Ing.

(56) Entgegenhaltungen:
- EP-A- 0 065 014
- DE-A- 4 133 760

## Beschreibung

Die Erfindung betrifft eine Anlage nach dem Oberbegriff des Anspruches 1.

Bei einer derartigen aus der EP-A-0 065 014 bekannten Anlage ist vor der in Transportrichtung ersten Längsschneidevorrichtung ein sogenannter Trimm-Schneider vorgesehen mittels dessen von der Seite her Querschnitte in die Bahn ausgeführt werden, die etwas größer sind, als die breitesmöglichen seitlichen Randstreifen, so daß letztere unabhängig von ihrer Breite auf jeden Fall durchtrennt werden. Der in Transportrichtung zweiten Längsschneidevorrichtung ist ein Querschneider nachgeordnet mit dem jeweils mittels eines Querschnittes die Bahn durchtrennt werden kann. Bei einem Format-Breiten-Wech-sel werden die Längsschneider der beiden Längsschneide-Vorrichtungen nacheinander in Eingriff und außer Eingriff gebracht, so daß die Längsschnit-te einander in Längsrichtung überlappen. Wenn die vom Trimm-Schneider erzeugten Querschnitte durch den Bereich der seitlichen Randstreifen den Querschneider erreichen, dann durchschneidet dieser benachbart hierzu die gesamte Wellpappebahn. Diese Verfahrensweise hat zur Konsequenz, daß immer etwa zwei nacheinander in der Duplex-Querschneidevorrichtung erzeugte Wellpappebögen als Abfall ausgeschieden werden müssen. Darüber hinaus müssen die Randstreifen jeweils neu in Abfördereirrichtungen eingeführt werden.

Bei einer aus der DE-A-41 33 760 bekannten Anlage ist vor der mindestens einen Längsschneidevorrichtung eine Querschneidevorrichtung für die Randstreifen vorgesehen. Bei einem vorzunehmenden Formatwechsel, d.h. bei einer Verstellung der Längsschneidevorrichtungen auf eine andere Format-Breite der zu schneidenden Wellpappe-Teilbahnen, wird von beiden Seiten der Bahn ein Querschnitt durchgeführt. Hierfür ist eine entsprechende Querschneidevorrichtung - bezogen auf die Transportrichtung der Wellpappe-Bahn - vor der mindestens einen Längschneidevorrichtung angeordnet. Die beiden seitlichen Querschnitte sind größer als der breiteste abzutrennende Randstreifen. Die komplette Bahn wird vor den Längsschneidevorrichtungen nicht quer durchtrennt. Die Wellpappe-Bahn kann bis zum Querschneider für die Wellpappebögen in Transportrichtung ohne Querteilung gefördert werden, wodurch die Führung und die genaue Förderbewegung aufrechterhalten werden. Die quer verlaufenden und die längs verlaufenden Schnitte werden exakt und lagegerecht ausgeführt. Der Wellpappe-Bahnbereich, der bei Formatwechsel überlappende Formate aufweist, wird durch den am Ende der Anlage befindlichen Querschneider als Abfall herausgeschnitten und ausgeschleust. Nachteilig ist, daß die Randstreifen quer geschnitten werden und jeweils bei einem Formatwechsel neu in die Abfördereinrichtungen eingeführt werden müssen, was bei den hohen Transportgeschwindigkeiten der Wellpappe-Bahn zu Störungen führen kann. Bei dieser Ausgestaltung kann die am Ende eingesetzte Querschneidvorrichtung zum Schneiden der Wellpappebögen aus den Wellpappe-Teilbahnen nur als Simplex-Querschneidevorrichtung ausgebildet sein, d.h. die einzelnen Wellpappe-Teilbahnen müssen die gleiche Format-Länge haben. Wenn Wellpappebögen unterschiedlicher Format-Länge hergestellt werden sollen, ist eine solche Anlage zur Herstellung von Wellpappebögen mit veränderbarem Format derart ausgebildet, daß - bezogen auf die Transportrichtung - der mindestens einen Längssehneidevorrichtung ein Querschneider vorgeordnet ist, durch den die Wellpappe-Bahn über die gesamte Bahnbreite geteilt wird. Die Restbahn wird für eine bestimmte Bogenzahl beschleunigt, so daß eine Lücke zwischen der vorlaufenden Wellpappe-Bahn und der nachkommenden Wellpappe-Bahn entsteht. Damit eine ausreichend lange Lücke entsteht, muß ein entsprechend langer Überführtisch zwischen dem Querschneider und dem mindestens einen Längsschneider vorhanden sein. Wenn aufgrund der Lücke die vorlaufende Wellpappe-Bahn die Längsschneidevorrichtung bereits verlassen hat und die nachfolgende Wellpappe-Bahn diese noch nicht erreicht hat werden die Längsschneideeinrichtungen und gegebenenfalls Rillvorrichtungen auf die neue Format-Breite bzw. die neuen Format-Breiten umgestellt. Nachteilig hierbei ist daß die in Transportrichtung nachlaufende Wellpappe-Bahn keinem Zug ausgesetzt ist und daher nicht ausreichend geführt ist. Hierdurch können Schnittungenauigkeiten am Querschneider und Schneidungenauigkeiten in der Längsschneidevorrichtung entstehen. Es entstehen so unnötige Abfälle und gegebenenfalls Störungen im Betrieb. Dies wirkt sich besonders störend bei Wellpappe-Bahnen aus, die vorbedruckt sind und passergenau geschnitten werden müssen. Darüber hinaus führt die zur Lückenbildung notwendige Beschleunigung der vorlaufenden Bahn ebenfalls zu Schnittungenauigkeiten.

Der Erfindung liegt die Aufgabe zugrunde, eine Anlage der gattungsgemäßen Art so auszugestalten, daß Wellpappebögen unterschiedlichen Formats unter Minimierung des Abfalls geschnitten werden können.

Diese Aufgabe wird erfindungsgemäß durch die Merkmale im Kennzeichnungsteil des Anspruches 1 gelöst. Mittels des Querschneiders werden zwei Trennschnitte durchgeführt, so daß der durch den Format-Breiten-Wechsel entstandene Abfall herausgeschnitten und in der Bogenschleuse ausgeschieden wird. Diese Ausgestaltung ermöglicht es, eine Duplex-Querschneidvorrichtung nachzuordnen, mittels derer Wellpappebögen unterschiedlicher Format-Länge geschnitten werden können. Die erfindungsgemäße Ausgestaltung ermöglicht weiterhin, die Randstreifen endlos in unterschiedlichen Breiten, die sich aus Format-Breiten-Wechseln ergeben, zu schneiden.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Seitenansicht einer Anlage zur Herstellung von Wellpappebögen mit veranderbarem Format in schematischer Darstellung,
- Fig. 2: eine Draufsicht auf die Anlage nach Fig. 1 und
- Fig. 3: eine Funktionsdarstellung der Veränderung der Breite der Randstreifen bei einem Formatwechsel in Draufsicht.

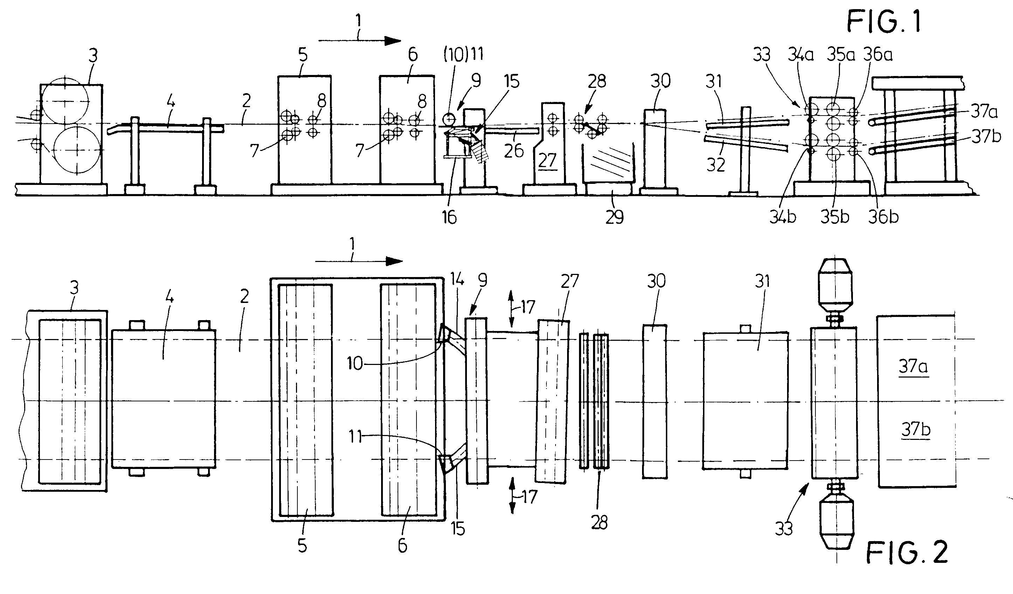

Die in den Fig. 1 und 2 dargestellte Anlage zur Herstellung von Wellpappebögen wird nachfolgend in Transportrichtung 1 einer Wellpappe-Bahn 2, also in der Zeichnung von links nach rechts beschrieben. Die Wellpappe-Bahn 2 wird mittels einer Heiz- und Zugvorrichtung 3 zugeführt und anschließend über einen kurzen Überführtisch 4 geführt. Zwischen der Heiz- und Zugvorrichtung 3 und dem Überführtisch 4 kann ein nicht dargestellter Querschneider angeordnet sein, der nur zum Herausschneiden von Abfall aus der Wellpappe-Bahn 2 bei Produktionsbeginn oder während der Produktion dienen würde.

An den Überführtisch 4 schließen sich zwei Längsschneidevorrichtungen 5, 6 an, die - bezogen auf die Transportrichtung 1 - zuerst mit Rilleinrichtungen 7 und dann mit Längsschneidern 8 versehen sind. Die Rilleinrichtungen 7 und die Längsschneider 8 können mit der Wellpappe-Bahn 2 in Eingriff gebracht oder außer Eingriff gebracht werden, wobei jeweils nur die Rilleinrichtungen 7 und Längsschneider 8 einer Längsschneidevorrichtung 5 oder 6 während des Betriebes mit der Wellpappe-Bahn 2 im Eingriff sind.

Der Längsschneidevorrichtung 6 ist eine Randstreifen-Schneidvorrichtung 9 nachgeordnet, die zwei Schneideinrichtungen 10, 11 zum Schneiden von seitlichen Randstreifen 12, 13 der Wellepappe-Bahn 2 aufweist. Den Schneideinrichtungen 10, 11 ist jeweils eine Abfördereinrichtung 14, 15 für einen solchen abgeschnittenen seitlichen Randstreifen 12 bzw. 13 zugeordnet. Je eine Schneideinrichtung 10 bzw. 11 ist mit einer Abfördereinrichtung 14 bzw. 15 gekoppelt, und zwar beispielsweise - wie aus Fig. 1 ersichtlich - auf einem gemeinsamen Schlitten 16. Die Schneideinrichtung 10 mit Abfördereinrichtung 14 und die Schneideinrichtung 11 mit Abfördereinrichtung 15 sind quer zur Transportrichtung 1 und in der Horizontalen in der durch einen Doppelpfeil gekennzeichneten Zustellrichtung 17 verstellbar und einstellbar.

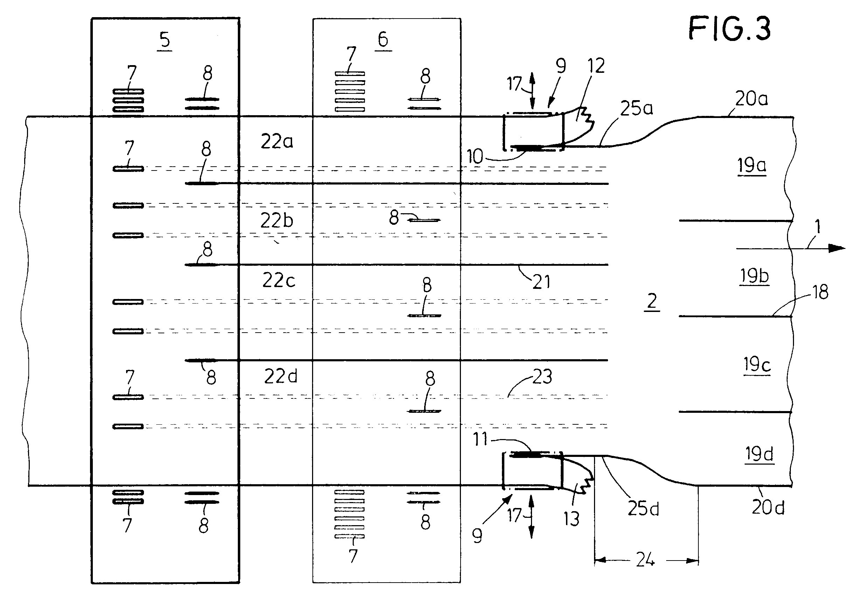

Die Wirkungsweise der Randstreifen-Schneidvorrichtung 9 im Zusammenwirken mit den Längsschneidevorrichtungen 5, 6 wird anhand der Fig. 3 erläutert. Von den beiden Längsschneidevorrichtungen 5, 6, die - wie aus den Fig. 1 und 2 hervorgeht - zu einer Einheit zusammengefaßt sein können, war bisher die in Transportrichtung 1 hintere Längsschneidevorrichtung 6 im Einsatz. Ihre Längsschneider 8 haben die Wellpappe-Bahn 2 durch Längs-Schnitte 18 in vier Wellpappe-Teilbahnen 19a, 19b, 19c und 19d geschnitten, wobei die beiden äußeren Teilbahnen 19a und 19d mittels der Schneideinrichtungen 10, 11 der Randstreifen-Schneidvorrichtung 9 so beschnitten wurden, daß sie Seitenränder 20a und 20d erhalten haben. Aus Gründen der Übersichtlichkeit ist die Darstellung in Fig. 3 so gewählt, daß hierbei die Rilleinrichtungen 7 der Längsschneidevorrichtung 6 nicht im Eingriff waren. Bei dem in Fig. 3 dargestellten Format-Breiten-Wechsel sind die Längsschneider 8 und auch die Rilleinrichtungen 7 der Längsschneidevorrichtung 5 vor dem Formatwechsel bereits auf die neuen Format-Breiten eingestellt. Beim eigentlichen Formatwechsel werden zuerst - bei fortlaufendem Transport der Wellpappe-Bahn 2 - die Längsschneider 8 der Längsschneidevorrichtung 6 außer Eingriff mit der Wellpappe-Bahn 2 gebracht, so daß sie nicht mehr schneiden. Die Längs-Schnitte 18 sind daher in Fig. 3 nach rechts weglaufend dargestellt. Die Längsschneider 8 und in diesem Fall auch die Rilleinrichtungen 7 der Längsschneidevorrichtung 5 werden zur Wellpappe-Bahn 2 zugestellt, also in Eingriff mit dieser gebracht, wodurch Längs-Schnitte 21 mit einer anderen Lage in der Wellpappe-Bahn 2 erzeugt werden, so daß nunmehr Wellpappe-Teilbahnen 22a, 22b, 22c und 22d mit anderer Format-Breite als zuvor geschnitten werden. Die Teilbahnen 22a bis 22d werden außerdem mit in Transportrichtung 1 verlaufenden Rillungen 23 versehen.

In dem Format-Breiten-Wechsel-Bereich 24 der Wellpappe-Bahn 2, in dem die Umstellung von den Teilbahnen 19a bis 19d auf die Teilbahnen 22a bis 22d erfolgt, werden die jedenfalls während des Format-Breiten-Wechsels ständig im Eingriff mit der Wellpappe-Bahn 2 befindlichen Schneideinrichtungen 10 und 11 und mit ihnen die Abfördereinrichtungen 14 und 15 in Zustellrichtung 17 verstellt, ohne daß sie während dieser Umstellung außer Eingriff mit der Wellpappe-Bahn 2 gebracht werden. Sie werden also in eine Position verfahren, in der sie die Seitenränder 25a und 25d der beiden außen liegenden Teilbahnen 22a und 22d in der richtigen Position schneiden. Da die Verstellung der Schneideinrichtungen 10, 11 während des Eingriffs in die Wellpappe-Bahn 2 und während deren Transport mit voller, d.h. normaler Arbeitsgeschwindigkeit durchgeführt wird, werden die seitlichen Randstreifen 12, 13 stetig ohne Unterbrechung abgeschnitten und in die Abfördereinrichtungen 14, 15 gegeben, bei denen es sich um die üblichen Absaugeinrichtungen handeln kann. Da die Abfördereinrichtungen 14, 15 zusammen mit den Schneideinrichtungen 10, 11 verstellt werden, kann auch bei einer solchen Verstellung, d.h. bei einem Wechsel der Breite der Randstreifen 12, 13, keine Störung bei ihrer Abförderung eintreten. Der Format-Breiten-Wechsel-Bereich 24 der Wellpappe-Bahn 2 bzw. der Teilbahnen 19a bis 19d und 22a bis 22d wird später als Abfall herausgeschnitten. Die Längsschnitte 18 bzw. 21 können - wie in Fig. 3 dargestellt - so angeordnet sein, daß zwischen ihnen ein geschlossener, nicht längsgetrennter Bereich der Wellpappe-Bahn 2 verbleibt; sie können aber auch einander überlappend ausgebildet sein.

Die Schneideinrichtungen 10 bzw. 11 können nicht nur mechanisch mit den Abfördereinrichtungen 14 bzw. 15 gekoppelt sein, sondern auch elektrisch, beispielsweise durch Antriebe mit Folgesteuerungen. Aus Gründen der Übersichtlichkeit sind auch die Antriebe der Schneideinrichtungen 10 bzw. 11 und auch der Längsschneider 8 und der Rilleinrichtungen 7 nicht dargestellt.

Die in Teilbahnen aufgeteilte Wellpappe-Bahn 2 wird über einen Überführtisch 26 einem Querschneider 27 zugeführt, in dem mittels zweier Trennschnitte der Format-Breiten-Wechsel-Bereich 24 der Wellpappe-Bahn 2 aus dieser herausgeschnitten wird. Diesem einfachen sogenannten Kurz-Querschneider 27 ist eine Bogenschleuse 28 nachgeordnet, mittels derer ein solcher Abfallbogen ausgeschleust und in einen Abfallbehälter 29 abtransportiert wird.

Der Bogenschleuse 28 ist eine Weiche 30 nachgeordnet, in der die Teilbahnen 19a bis 19d bzw. 22a bis 22d entsprechend der gewünschten zu schneidenden Format-Länge aufgeteilt werden. Sie werden dann über zwei übereinander befindliche Überführtische 31, 32 einer sogenannten Duplex-Querschneidvorrichtung 33 zugeführt, die jeweils paarweise einander zugeordnet zwei Paare von Einzugrollen 34a, 34b, zwei Paare von Messerwalzen 35a, 35b und zwei Paare von Auszugrollen 36a, 36b aufweist. Zwischen den Messerwalzen 35a werden Teilbahnen in Bögen einer anderen Format-Länge geschnitten als zwischen den Messerwalzen 35b.

Dem Duplex-Querschneider 33 sind Bogenablagen 37a, 37b nachgeordnet, durch die die von den Messerwalzen 35a und die von den Messerwalzen 35b kommenden Wellpappebögen getrennt abgefördert werden, wobei die über jede Bogenablage 37a bzw. 37b abgeförderten Wellpappebögen gleicher Format-Länge im Anschluß an jede Bogenablage 37 bzw. 37b noch entsprechend ihren unterschiedlichen Format-Breiten aufgeteilt und in unterschiedliche Bogenbehälter abgelegt werden können.

## Patentansprüche

1. Anlage zur Herstellung von Wellpappebögen mit veränderbarem Format
- mit mindestens einer Längschneidevorrichtung (5, 6) mit quer zur Transportrichtung (1) der ungeteilten Wellpappe-Bahn (2) verstellbaren Längschneidern (8) zum Schneiden von Wellpappe-Teilbahnen (19a bis 19d; 22a bis 22d) unterschiedlicher Format-Breite,
- mit quer zur Transportrichtung (1) der Wellpappe-Bahn (2) verstellbaren Schneideinrichtungen (10, 11) zum Schneiden von seitlichen Randstreifen (12, 13) der Wellpappe-Bahn (2),
- mit Abfördereinrichtungen (14, 15) für abgeschnittene Randstreifen (12, 13),
- mit einem in Transportrichtung (1) hinter der mindestens einen Längschneidevorrichtung (5, 6), den Schneideinrichtungen (10, 11) zum Schneiden von seitlichen Randstreifen (12, 13) und den Abfördereinrichtungen (14, 15) angeordneten Querschneider (27) zum Durchtrennen aller Wellpappe-Teilbahnen (19a bis 19d; 22a bis 22d),
- mit einer dem Querschneider (27) in Transportrichtung (1) nachgeordneten Weiche (30) zum Verzweigen von Wellpappe-Teilbahnen (19a bis 19d; 22a bis 22d) unterschiedlicher Format-Breite und
- mit einer der Weiche -(30) in Transportrichtung (1) nachgeordneten als Duplex-Querschneidvorrichtung ausgebildeten Querschneidevorrichtung (33) zum Schneiden von Wellpappebögen aus den Wellpappe-Teilbahnen (19a bis 19d; 22a bis 22d),
**dadurch gekennzeichnet,**
daß in Transportrichtung (1) hinter dem Querschneider (27) und vor der Weiche (30) eine Bogenschleuse (28) zum Ausschleusen einer durch zwei Trennschnitte des Querschneiders (27) aus der Wellpappe-Bahn (2) geschnittenen, den Format-Breiten-Wechsel-Bereich (24) der Wellpappe-Bahn (2) umfassenden Abfallbogen angeordnet ist und
daß die Schneideinrichtungen (10, 11) zum Schneiden der Randstreifen (12, 13) der Wellpappe-Bahn (2) unabhängig von den Langsschneidern (5, 6) zum Schneiden der Wellpappe-Teilbahnen (19a bis 19d; 22a bis 22d) quer zur Transportrichtung (1) der Wellpappe-Bahn (2) verschiebbar und mindestens während des Format-Breiten-Wechsels ständig im Eingriff mit der Wellpappe-Bahn (2) sind.

2. Anlage nach Anspruch 1, **dadurch gekennzeichnet, daß** die Abfördereinrichtungen (14, 15) für die Randstreifen (12, 13) quer zur Transportrichtung (1) der Wellpappe-Bahn (2) verschiebbar sind und daß jeweils eine Schneideinrichtung (10, 11) zum Schneiden eines Randstreifens (12, 13) mit einer Abfördereinrichtung (14, 15) gekoppelt ist.

3. Anlage nach Anspruch 2, **dadurch gekennzeichnet, daß** jeweils eine Schneideinrichtung (10, 11) zum Schneiden eines Randstreifens (12, 13) mechanisch mit einer Abfördereinrichtung (14, 15) gekoppelt ist.

## Claims

1. An apparatus for the manufacture of sheets of corrugated board of variable size, comprising
- at least one longitudinal cutting arrangement (5, 6) having longitudinal cutters (8) adjustable at right angles to the conveying direction (1) of the non-divided web (2) of corrugated board for cutting sectional webs (19a to 19d; 22a to 22d) of corrugated board of differing format width,
- cutting devices (10, 11) adjustable at right angles to the conveying direction (1) of the web (2) of corrugated board for cutting lateral margins (12, 13) of the web (2) of corrugated board,
- discharge devices (14, 15) for margins (12, 13) that have been cut off,
- a cross cutter (27) for severing all the sectional webs (19a to 19d; 22a to 22d) of corrugated board, which, seen in the conveying direction (1), is disposed downstream of the at least one longitudinal cutting arrangement (5, 6), of the cutting devices (10, 11) for cutting lateral margins (12, 13) and of the discharge devices (14, 15),
- a switch (30) for distributing sectional webs (19a to 19d; 22a to 22d) of corrugated board of differing format width, which is disposed downstream of the cross cutter (27) in the conveying direction(1), and
- a cross cutting arrangement (33) in the form of a duplex cross cutting arrangement disposed downstream of the switch (30) in the conveying direction, and serving to cut sheets of corrugated board from the sectional webs (19a to 19d; 22a to 22d) of corrugated board,
**characterized in that**
seen in the conveying direction, a sheet sluice (28) is disposed downstream of the cross-cutter (27) and upstream of the switch (30), serving to discard a waste sheet that has been cut out of the web (2) of corrugated board by two cuts of the cross cutter (27) and comprises the portion (24) of change of format width of the web (2) of corrugated board, and
in that the cutting devices (10, 11) for cutting the margins (12, 13) of the web (2) of corrugated board are displaceable at right angles to the conveying direction (1) of the web (2) of corrugated board independently of the longitudinal cutters (5, 6) for cutting the sectional webs (19a to 19d; 22a to 22d) of corrugated board and in that they are permanently in engagement with the web (2) of corrugated board at least during the change of format width.

2. An apparatus according to claim 1, **characterized in that** the discharge devices (14, 15) for the margins (12, 13) are displaceable at right angles to the conveying direction (1) of the web (2) of corrugated board and in that one cutting device (10, 11) at a time for cutting a margin (12, 13) is coupled with a discharge device (14, 15).

3. An apparatus according to claim 2, **characterized in that** one cutting device (10, 11) at a time for cutting a margin (12, 13) is mechanically coupled with a discharge device (14, 15).

## Revendications

1. Appareil pour la fabrication de feuilles de carton ondulé de format variable, comprenant
- au moins un dispositif (5, 6) de sectionnement longitudinal, muni de sectionneurs longitudinaux (8) réglables transversalement par rapport à la direction de transport (1) de la nappe de carton ondulé non scindée, en vue de sectionner des nappes partielles (19a à 19d ; 22a à 22d) de carton ondule d'une largeur de format différente,
- des mécanismes de sectionnement (10, 11) réglables transversalement par rapport à la direction du transport (1) de la nappe (2) de carton ondulé, en vue de sectionner des bandes marginales latérales (12, 13) de ladite nappe (2) de carton ondulé,
- des mécanismes d'évacuation (14, 15) affectés à des bandes marginales sectionnées (12, 13),
- un sectionneur transversal (27) qui est destiné à séparer toutes les nappes partielles (19a à 19d ; 22a à 22d) de carton ondulé et est placé, dans la direction du transport (1), derrière le dispositif (5, 6) de sectionnement longitudinal prévu au minimum, derrière les mécanismes de sectionnement (10, 11) conçus pour sectionner des bandes marginales latérales (12, 13), et derrière les mécanismes d'évacuation (14, 15),
- un aiguillage (30) installé en aval du sectionneur transversal (27) dans la direction du transport (1), en vue de faire bifurquer des nappes partielles (19a à 19d ; 22a à 22d) de carton ondulé d'une largeur de format différente, et
- un dispositif (33) de sectionnement transversal qui se trouve en aval de l'aiguillage (30) dans la direction du transport (1), est réalisé sous la forme d'un dispositif jumelé de sectionnement transversal et est destiné à sectionner des feuilles de carton ondulé à partir des nappes partielles (19a à 19d ; 22a à 22d) de carton ondulé,
caractérisé par le fait
qu'une trieuse (28) de feuilles est située derrière le sectionneur transversal (27) et devant l'aiguillage (30), dans la direction du transport (1), en vue de l'élimination d'une feuille de rebut qui est sectionnée d'avec la nappe (2) de carton ondulé par deux découpes de séparation dudit sectionneur transversal (27), et contient la zone (24) de changement de largeur de format de ladite nappe (2) de carton ondulé ; et
que les mécanismes de sectionnement (10, 11), destinés au sectionnement des bandes marginales (12, 13) de la nappe (2) de carton ondulé, peuvent coulisser transversalement par rapport à la direction du transport (1) de ladite nappe (2) de carton ondulé, indépendamment des sectionneurs longitudinaux (5, 6) affectés au sectionnement des nappes partielles (19a à 19d ; 22a à 22d) de carton ondulé, et sont en prise permanente avec ladite nappe (2) de carton ondulé, au moins lors du changement de largeur de format.

2. Appareil selon la revendication 1, caractérisé par le fait que les mécanismes d'évacuation (14, 15), affectés aux bandes marginales (12, 13), peuvent coulisser transversalement par rapport à la direction du transport (1) de la nappe (2) de carton ondulé ; et par le fait qu'un mécanisme de sectionnement (10, 11) respectif, destiné au sectionnement d'une bande marginale (12, 13), est accouplé avec un mécanisme d'évacuation (14, 15).

3. Appareil selon la revendication 2, caractérisé par le fait qu'un mécanisme de sectionnement (10, 11) respectif, destiné au sectionnement d'une bande marginale (12, 13), est accouplé mécaniquement avec un mécanisme d'évacuation (14, 15).
